# EUROPEAN PATENT APPLICATION

(11) **EP 3 477 064 A1**
(43) Date of publication of application: **01.05.2019**
(21) Application number: 18202162.6
(22) Date of filing: 23.10.2018
(51) Int. Cl.: F01D 25/18

(54) **GAS TURBINE ENGINE WITH VACUUM GENERATOR FOR REDUCING BEARING COMPARTMENT PRESSURE**

(30) Priority: 24.10.2017 US 201715791483
(71) Applicant: United Technologies Corporation, Farmington, CT 06032 (US)
(72) Inventor: GLAHN, Jorn A., Manchester, CT Connecticut 06042 (US); HOWLETT, Matthew J., North Haven, CT Connecticut 06473 (US); KELLY, Myles R., Willimantic, CT Connecticut 06226 (US); PINEDO, Victor M., Bridgeport, CT Connecticut 06604 (US); REINHARDT, Gregory E., South Glastonbury, CT Connecticut 06073 (US); SCHAFER, Bradley C., Ellington, CT Connecticut 06029 (US); Stearns, Ethan K., Lebanon, CT Connecticut 06249 (US)
(74) Representative: Dehns

(57) **Abstract**

A gas turbine engine (20) includes a bearing compartment (60) that has at least one seal (64), a bearing disposed in the bearing compartment (60), a deoiler (68) fluidly connected with the bearing compartment (60), and a vacuum generator (70) fluidly connected with the deoiler (68).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

### SUMMARY

A gas turbine engine according to one disclosed, non-limiting embodiment includes a bearing compartment that has at least one seal, a bearing disposed in the bearing compartment, a deoiler fluidly connected with the bearing compartment; and a vacuum generator fluidly connected with the deoiler.

In an embodiment of any of the foregoing embodiments, the vacuum generator includes a venturi tube.

In a further embodiment of any of the foregoing embodiments, the vacuum generator is fluidly connected with a compressor section for providing air to operate the vacuum generator.

In a further embodiment of any of the foregoing embodiments, the vacuum generator is fluidly connected with an air supply system for providing air to operate the vacuum generator.

A gas turbine engine according to another disclosed non-limiting embodiment includes a bearing compartment that has at least one seal, a bearing disposed in the bearing compartment, a deoiler fluidly connected with the bearing compartment, a vacuum generator fluidly connected with the deoiler, and an air supply system connected with the vacuum generator for providing air to operate the vacuum generator. The air supply system has two sources of the air; and a controller in communication with the air supply system and configured to switch between the two source of air.

In an embodiment of any of the foregoing embodiments, the vacuum generator includes a venturi tube.

In a further embodiment of any of the foregoing embodiments, one of the two air sources is a compressor section.

In a further embodiment of any of the foregoing embodiments, one of the two air sources is an auxiliary power unit.

In a further embodiment of any of the foregoing embodiments, the two air sources include a compressor section and an auxiliary power unit.

In a further embodiment of any of the foregoing embodiments, the air supply system includes a check valve disposed between the auxiliary power unit and the vacuum generator.

In a further embodiment of any of the foregoing embodiments, the air supply system includes an flow-control valve disposed between the compressor section and the vacuum generator.

In a further embodiment of any of the foregoing embodiments, the vacuum generator is vented overboard.

A gas turbine engine according to another disclosed non-limiting embodiment includes a bearing compartment that has at least one seal, a bearing disposed in the bearing compartment, a compressor section fluidly connected with the bearing compartment, an oil source for providing oil to the bearing, a deoiler fluidly connected with the bearing compartment, a vacuum generator fluidly connected with the deoiler, and an air supply system connected with the vacuum generator for providing air to operate the vacuum generator. The air supply system havs a source of the air that is not the compressor section.

In an embodiment of any of the foregoing embodiments, the vacuum generator includes a venturi tube.

In a further embodiment of any of the foregoing embodiments, the air supply system includes the compressor section as another source of the air.

A further embodiment of the any of the foregoing embodiments includes a controller in communication with the air supply system and configured to switch between the source of the air and the compressor section as another source of the air.

In a further embodiment of any of the foregoing embodiments, the source of the air is an auxiliary power unit.

In a further embodiment of any of the foregoing embodiments, the air supply system includes a check valve disposed between the auxiliary power unit and the vacuum generator.

In a further embodiment of any of the foregoing embodiments, the air supply system includes a flow-control valve disposed between the compressor section and the vacuum generator.

In a further embodiment of any of the foregoing embodiments, the vacuum generator is vented overboard.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates a bearing compartment, a deoiler fluidly connected with the bearing compartment, and a vacuum generator fluidly connected with the deoiler.
Figure 3 also illustrates a vacuum generator, but with an air supply system.
Figure 4 illustrates an example vacuum generator that includes a venturi tube.
Figure 5 illustrates an example air supply system that has two air supply sources.

### DETAILED DESCRIPTION

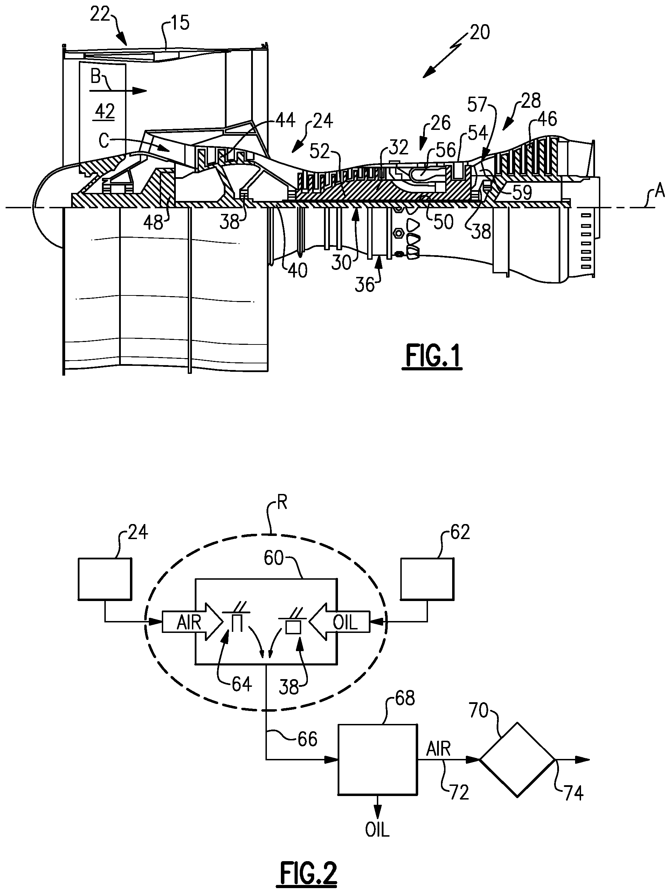

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second.

One or more of the bearing systems 38 of the engine 20 may be contained within a bearing compartment 60, which schematically shown in Figure 2. Oil from an oil source 62 of the engine 20 is provided into the bearing compartment 60 to the bearing 38 to cool and lubricate the bearing 38. To contain the oil in the bearing compartment 60 and reduce or prevent oil loss from the engine 20, the bearing compartment 60 is generally sealed from adjacent or surrounding regions, represented generally at R, in the engine 20. In this regard, the bearing compartment 60 includes one or more seals 64 that serve to limit escape of the oil from the bearing compartment 60 into the adjacent regions R. Buffer air from an air source, such as the compressor section 24 of the engine 20, is provided to the adjacent region R and across the seal 64 into the bearing compartment 60. The buffer air is generally provided at a relatively high pressure in the region R such that there is a pressure differential (pressure drop) across the seal 64 between the adjacent region R and the interior of the bearing compartment 60.

The buffer air and oil from the bearing 38 are discharged from the bearing compartment 60 through line 66 to a deoiler 68. The deoiler 68 is known and not particularly limited but may include a separator or the like. As an example, the deoiler 68 can be, but is not limited to, a centrifugal separator. The deoiler 68 separates the oil from the air so that the oil can be re-used rather than dumped overboard with the air. The oil can be returned to the oil source 62.

To maintain sealing across the seal 64, the pressure differential between the adjacent region R and the interior of the bearing compartment 60 is kept above a threshold. However, there is a challenge during startup of the engine 20 to provide high pressure buffer air to keep the pressure differential above the threshold. In this regard, the engine 20 includes a vacuum generator 70 located downstream of the deoiler 68. The vacuum generator 70 is operable to produce a vacuum and is fluidly connected with the deoiler 68 by line 72. Since the deoiler 68 is also fluidly connected to the interior of the bearing compartment 60 by line 66, the vacuum generated by the vacuum generator 70 provides a lower pressure in the interior of the bearing compartment 60. This effectively increases the pressure differential across the seal 64 between the adjacent region R and the interior of the bearing compartment 60. In turn, the increased pressure differential reduces oil loss across the seal 64. The air provided to the vacuum generator 70 from the deoiler 68 is then dumped overboard from the engine 20 via vent 74.

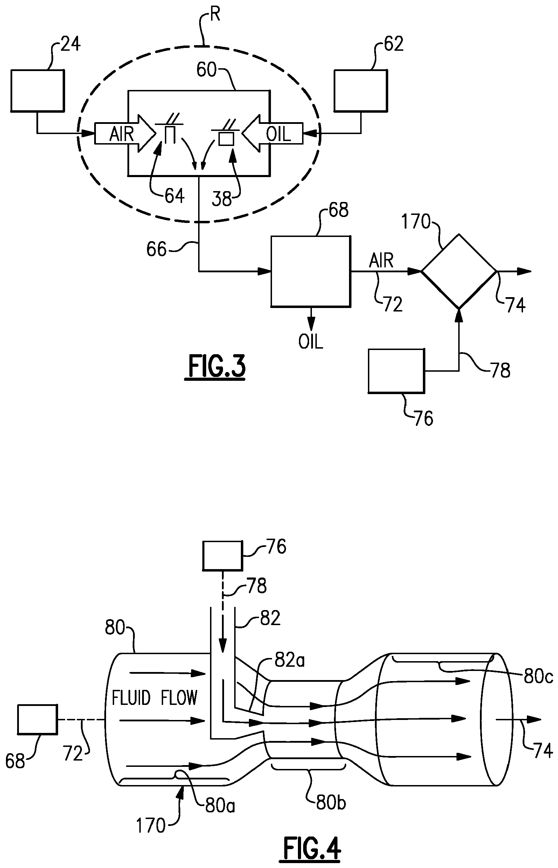

Figure 3 illustrates a further example that is similar to the example shown in Figure 2, but additionally includes an air supply system 76. The air supply system 76 is operable to provide source air to operate the vacuum generator 170. For example, the air supply system is fluidly connected by line 78 to the vacuum generator 70. The air supply system can be a compressor, a duct that carries compressed air, or the like. The source air either drives the vacuum generator 70 or facilitates generation of a vacuum in the vacuum generator 70.

Figure 4 illustrates a non-limiting example of the vacuum generator 170. In this example, the vacuum generator 170 includes a venturi tube 80. The venturi tube 80 includes an inlet section 80a that converges to a throat section 80b, which then diverges to an outlet section 80c. The venturi tube 80 includes a tap 82 connected to a nozzle 82a that provides high velocity flow into throat section 80b. The inlet section 80a is fluidly connected with the de-oiler 68 via line 72 and the tap 82 is fluidly connected with the air supply system 76 via line 78.

During operation the air supply system 76 provides a source of air that flows into the throat section 80b of the venturi tube 80. As the flow of the source air expands into the throat section 80b, the low static pressure of the source air produces a vacuum at the inlet of the venturi tube 80. The vacuum, in turn, reduces the pressure through the deoiler 68 and in the interior of the bearing compartment 60. The air from the deoiler 68 and the source air from the air supply system 76 combine in the throat section 80b and are then vented overboard through the vent 74.

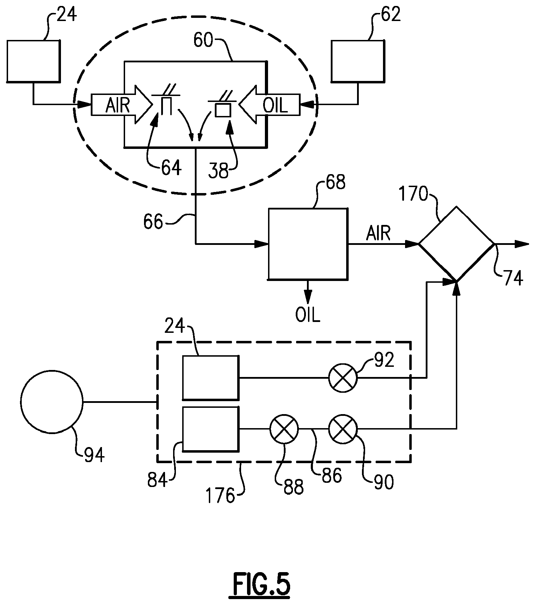

Figure 5 illustrates another example that is similar to the example shown in Figure 3. In this example, an air supply system 176 includes two sources of the air that is provided to the vacuum generator 170. One of the air sources is the compressor section 24. A second source 84 of air is different than the compressor section 24. For example, the second source 84 of air is an auxiliary power unit. For instance the auxiliary power unit is a non-propulsion gas turbine engine. The auxiliary power unit provides compressed air that can be tapped as the source air into the vacuum generator 170. As an example, the tap can be off of an air duct 86 between the auxiliary power unit and an air turbine starter, downstream of a starter air valve 88. Thus, when the starter air valve 88 is open, source air is provided through a check valve 90 to the vacuum generator 170. When the starter air valve 88 is closed, a valve 92 can be used to open flow from the compressor section 24 to provide the source air to the vacuum generator 170.

A controller 94 is in communication with the air supply system 176 and is operable to control the valves 88 and 92. The controller 94 may include hardware, such as one or more microprocessors, software, or both that are configured (e.g., via programming) to execute the function described herein. In one example, the controller 94 is also configured to selectively open and close the valves 88 and 92 based upon the operating mode of the engine 20. For instance, during startup of the engine 20, when there is insufficient compressed air from the compressor section 24 to maintain the pressure differential across the seal 64 above the threshold, the valve 92 is in a closed state and the valve 88 is in an open state such that source air is provided from the second air source 84 to operate the vacuum generator 170. The check valve 90 prevents back-flow from the vacuum generator 170 to the second air source. Once pressure in the compressor section 24 is sufficient (e.g., at a designated compressor stage or at the diffuser stage), such as at the end of startup or after startup, the valve 88 can be closed and the valve 92 opened to provide source air from the compressor section 24 to operate the vacuum generator 170. Thus, the controller 94 is operable to switch between the two air sources, depending on the operating mode of the engine 20.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine (20) comprising:
a bearing compartment (60) having at least one seal (64);
a bearing disposed in the bearing compartment (60);
a deoiler (68) fluidly connected with the bearing compartment (60); and
a vacuum generator (70; 170) fluidly connected with the deoiler (68).

2. The gas turbine engine (20) as recited in claim 1, wherein the vacuum generator (70; 170) is fluidly connected with a compressor section (24) for providing air to operate the vacuum generator (70; 170).

3. The gas turbine engine (20) as recited in claim 1, wherein the vacuum generator (70; 170) is fluidly connected with an air supply system (76; 176) for providing air to operate the vacuum generator (70; 170).

4. The gas turbine engine (20) of claim 1, further comprising:
an air supply system (76; 176) connected with the vacuum generator (70; 170) for providing air to operate the vacuum generator (70; 170), the air supply system (76; 176) having two sources (24, 84) of the air; and
a controller (94) in communication with the air supply system (76; 176) and configured to switch between the two source of air.

5. The gas turbine engine (20) as recited in claim 4, wherein one of the two air sources (24, 84) is a compressor section (24).

6. The gas turbine engine (20) as recited in claim 4 or 5, wherein one of the two air sources (24, 84) is an auxiliary power unit (84).

7. The gas turbine engine (20) as recited in claim 4, wherein the two air sources (24, 84) include a compressor section (24) and an auxiliary power unit (84).

8. The gas turbine engine (20) of claim 1, further comprising:
a compressor section (24) fluidly connected with the bearing compartment (60);
an oil source (62) for providing oil to the bearing; and
an air supply system (76; 176) connected with the vacuum generator (70; 170) for providing air to operate the vacuum generator (70; 170), the air supply system (76; 176) having a source (84) of the air that is not the compressor section (24).

9. The gas turbine engine (20) as recited in claim 8, wherein the air supply system (76; 176) includes the compressor section (24) as another source (24) of the air.

10. The gas turbine engine (20) as recited in claim 8, further comprising a controller (94) in communication with the air supply system (76; 176) and configured to switch between the source (84) of the air and the compressor section (24) as another source of the air.

11. The gas turbine engine (20) as recited in any of claims 8 to 10, wherein the source (84) of the air is an auxiliary power unit (84).

12. The gas turbine engine (20) as recited in any preceding claim, wherein the vacuum generator (70; 170) includes a venturi tube (80).

13. The gas turbine engine (20) as recited in any preceding claim, wherein a or the air supply system (76; 176) includes a check valve (90) disposed between a or the auxiliary power unit (84) and the vacuum generator (70; 170).

14. The gas turbine engine (20) as recited in any preceding claim, wherein a or the air supply system (76; 176) includes a flow-control valve (92) disposed between a or the compressor section (24) and the vacuum generator (70; 170).

15. The gas turbine engine (20) as recited in any preceding claim, wherein the vacuum generator (70; 170) is vented overboard.
